# EUROPEAN PATENT APPLICATION

(11) **EP 4 316 256 A2**
(43) Date of publication of application: **07.02.2024**
(21) Application number: 23218683.3
(22) Date of filing: 16.01.2017
(51) Int. Cl.: A23J 1/00, A23J 1/10

(54) **METHOD FOR PRODUCING HIGHLY DIGESTIBLE HYDROLYZED KERATINACEOUS MATERIAL**

(30) Priority: 14.01.2016 EP 16151355
(62) Divisional of application: 17700439.7
(71) Applicant: Tessenderlo Group NV, 1050 Brussel (BE)
(72) Inventor: FILLIÈRES, Romain, 27200 VERNON (FR); BELMANS, Marc, 3980 TESSENDERLO (BE); ROGIERS, Joeri, 3550 ZOLDER (BE); DELMOTTE, Matthieu, 35000 RENNES (FR); LOUSSOUARN, Vincent, 56930 Plumeliau (FR)
(74) Representative: Hoyng Rokh Monegier B.V.

(57) **Abstract**

The invention relates to a method for producing highly digestible, partly hydrolyzed keratinaceous material, preferably from feathers, hair, wool, hooves or nails, comprising the steps of (1) hydrolyzing keratinaceous material in the presence of water, in a hydrolyser with heat and at a pressure between about 2 bar and about 100 bar, and (2) concurrently drying and grinding the resultant hydrolyzed keratinaceous material in an air turbulence mill at about atmospheric pressure such that the drop in pepsin and/or ileal digestibility is less than 10%, and/or the pepsin and ileal digestibility remain higher than respectively 75% and 80%, wherein the resultant keratinaceous material comprises at least partly insoluble material, and wherein the average particle size of the dry product leaving the air turbulence mill measured as d50 in volume fraction, as measured with laser diffraction using a dry powder Beckman Coulter particle size analyzer, is between about 20 µm and about 0.7 mm and the d90 is below about 1 mm..

## Description

### FIELD OF THE INVENTION

The present invention relates to a method for producing highly digestible hydrolyzed keratinaceous material, such as feather meal or meal from hair.

### BACKGROUND OF THE INVENTION

Animal feathers, hair, wool, hooves, nails and the like are a source of keratinaceous material. Such keratinaceous material, which is generally a by-product from poultry, pigs, cattle, sheep and the like is high in protein content but much of the protein is indigestible as such, e.g. as low as 20% only of the protein is digestible. Poultry feathers typically contain approximately 80 to 90% protein in the form of ß-keratin. Keratin contains a relatively high amount of cysteine that results in cross-linking in the protein. The high degree of cross-linking with (di)sulfide bridges is the reason why much of the protein in for example feathers is indigestible. Keratin must hence be cleaved before its protein content can be digested by animals (McCasland and Richardson 1966, Poult. Sci., 45:1231-1236; Moran et al. 1966 Poult. Sci., 45: 1257-1266). Hydrolyzed feathers can therefore provide a valuable source of digestible proteins and amino acids. Accordingly feather hydrolysate (i.e. hydrolyzed feathers) can be utilized in a numbers of ways, such as in animal feed, pet food and aqua feed.

Methods for processing feathers or hair to increase digestibility and to allow their use as a protein source for feeding poultry and livestock are known in the art. Generally, such methods involve using hydrolysis to break the sulfide bridges in the keratinaceous proteins and incorporating the resulting hydrolyzed proteins into feeds. The commonly used methods of processing keratin-containing stock are subdivided into 1) hydrothermal and pressurized treatment methods, 2) acid, alkaline and/or enzymatic hydrolysis methods or 3) combinations thereof.

Several methods for producing partially hydrolyzed keratinaceous material such as feather meal are known in the art; including US5772968, US4286884, US4172073 and EP 2832236.

The keratinaceous material is generally not completely hydrolyzed to mono-amino acids to improve digestibility. The resultant material from the partial hydrolysis of the keratinaceous material is partly insoluble in water, and may comprise a mixture of liquid (dissolved) and solid (insoluble material). Generally the resulting product is subsequently dried to obtain a solid product. Drying may impart digestibility of the material according to for example the pepsin and/or ileal digestibility test.

Disadvantages of current procedures such as the degradation of heat sensitive amino acids and polypeptides and the relatively low digestibility of the resulting products, have led to continued interest in economical new hydrolysis methods of keratinaceous material which do not require harsh treatment conditions.

WO2015/014860 describes a process wherein the drying step preferably is performed under reduced pressure, in order to keep the drying temperature low, so that little degradation occurs of the feather meal during drying.

### SUMMARY OF THE INVENTION

It is an object of the invention to provide a method for producing partly hydrolyzed keratinaceous material with a very high digestibility and having high nutritional value while having good powder properties, in an efficient process.

This object of the invention is achieved by the method for producing digestible, partly hydrolyzed keratinaceous material, preferably from feathers, hair, hooves, wool or nails, comprising the steps of (i) hydrolyzing keratinaceous material in the presence of water, in a hydrolyser with heat and at a pressure between about 2 bar and about 100 bar, and (ii) concurrently drying and grinding the resultant hydrolyzed keratinaceous material in an air turbulence mill, at about atmospheric pressure, such that the drop in pepsin and/or ileal digestibility is less than 10%, and/or the pepsin and ileal digestibility remains higher than respectively 75% and 80%, wherein the resultant keratinaceous material comprises at least partly insoluble material, and wherein the average particle size of the product (d50) leaving the air turbulence mill is between 20 µm and 0.7 mm and the d90 is below 1 mm as measured with laser diffraction using a dry powder Beckman Coulter particle size analyzer.

It is a further object of the invention to provide a highly digestible partly hydrolyzed keratinaceous material with an improved nutritional value for feed applications.

These, and additional aspects of the present invention are discussed below.

The process of the present invention has a number of advantages. The efficient drying in a short time results in a product with excellent quality attributes, like for example a pepsin digestibility of preferably 80% or higher or even 82% or higher like for example 85% or higher, and an ileal digestibility of over 85%, or even over 90%, such as for example 92% or higher. The process is furthermore efficient in that up to five operations can be performed in one relatively simple set up. In conventional processes, drying, grinding, micronizing, cooling and sieving are operations performed in different steps, while the current process allows to perform these 5 steps in one operation. Furthermore, a short residence time of a few seconds is possible versus 60-90 min used in a vacuum disc dryer as described in WO2015/014860.

The process of the present invention has also the additional benefit of mitigating significantly the risk of microbiological contamination of the dried product with Salmonella and the like. The absence of dead zones in the air turbulence mill due to the turbulence created by the high speed rotation of the rotor and the flow of gas and the easy possibility of increasing - if necessary - the temperature of the flow of gas during a production run are important factors to avoid product buildup or cold spots and thus prevents and mitigates microbiological contaminations.

### DETAILED DESCRIPTION OF THE INVENTION

The term "about" means plus or minus 20%, preferably plus or minus 10%, more preferably plus or minus 5%, most preferably plus or minus 2%.

The term "keratinaceous" also encompasses the term "keratinous", means all material having a high keratin content such as feathers, hooves, wool, nails, hair and the like.

The term "keratin hydrolysate" as used herein refers to the resultant product following the hydrolysis of a material comprising keratin.

### Raw materials

The keratinaceous material used in the present invention preferably comprises feathers, hair, wool, hooves or nails. Feathers are by-products from poultry (chicken, turkey, duck and the like), and hair and wool is a by-product from pigs, cattle, sheep and the like. Hooves or nails can originate from a variety of animal sources and may be used in ground form as a source of keratinaceous material.

In a preferred embodiment, feathers are used as keratinaceous material as this material is continuously available in substantial amounts, such that an industrial plant producing keratinaceous material can be on stream continuously.

Advantageously, keratinaceous material produced in accordance with a method of the present invention may provide a valuable source of protein and/or source of amino acids in animal feed. For example, keratinaceous material can provide a source of one or more of the following amino acids: methionine, cysteine, lysine, threonine, arginine, isoleucine, leucine, valine, histidine, phenylalanine, glycine, serine, proline, alanine, aspartic acid, tyrosine, tryptophan and glutamic acid.

The keratinaceous material for use in the present invention preferably has a high protein content (generally more than 70 wt% of the dry substance), comprising at least 17 amino acids. The protein content normally is determined by measuring the total amount of nitrogen, and multiplying said total nitrogen content with the so-called Jones factor of 6.25. The result is the theoretical amount of protein. Generally, feathers comprise between 70-90% protein on solids; the amount of solids in raw feathers collected from a slaughterhouse generally is about 30 wt%. Feather meal generally contains about 72 to about 87 wt% protein, assuming less than 8 wt% moisture.

In an embodiment of the invention blood of slaughtered animals may also be processed together with the keratinaceous material.

The blood product may be mixed with the raw feathers, or other keratinaceous material, before the hydrolysis step and hydrolyzed and dried according to the process of the present invention to obtain meal suitable for use as food or feed product. Alternatively, the blood and the feathers are introduced in the hydrolyser via separate inlets, and mixed and hydrolyzed in the hydrolyser. In an alternative, preferred embodiment, clotted blood may be combined with hydrolyzed keratinaceous material before entering the air turbulence mill.

In such preferred embodiment of the invention, the raw full blood can first be coagulated by direct contact and mixing with live steam and further centrifuged to remove mechanically the blood water from the coagulated blood. The coagulated blood commonly referred to as "blood clot" can be mixed together with the hydrolyzed feathers coming out of the hydrolyser and subsequently dried as a mixture in the air turbulence mill.

Alternatively, it is possible to use blood that is not coagulated after slaughter of the animals. Blood may be treated with conventional anticoagulants such as EDTA and citrate. Alternatively, red blood cells are lysed by osmotic shock, pH shock and the like. The blood may then be further treated according to the methods described for keratinaceous material and in this alternative embodiment, it is preferably mixed with the raw keratinaceous material.

In case blood is used in combination with keratinaceous material, suitable amounts of keratinaceous material to blood that may be used together with feathers or other keratinaceous material include a ratio between 1 to 10, preferably from 1.3 to 3. Generally, the relative amounts will be about 10-50 wt% of blood and 50-90 wt% of keratinaceous material, preferably 25-45 wt% blood and 55-75 wt% keratinaceous material.

### Hydrolysis process

The partial hydrolysis of the keratinaceous material in step (i) of the process of the invention, in a preferred process will be the following: (a) loading of a continuous or discontinuous vertical or horizontal hydrolyser with raw feathers or other keratinaceous material, optionally with raw blood, (in case of raw feathers, these have e.g. between 55% and 70% moisture; which moisture generally comes from the slaughterhouse as the birds are scalded in hot water before plucking, plucked feathers are then conveyed in water to a centrifuge or press before discharge in the receiving bin), (b) heating up of the hydrolyser by means of steam jackets (and/or injection of direct steam), pressure build up due to water evaporation and/or direct steam injection, maintaining pressure at about 2 bar to about 100 bar, preferably between about 2 and about 15 bar, and more preferably between 2 to 8 bars during 5 seconds up to 240 min, preferably between 90 seconds up to 30 min, more preferably between 5 min to 40 min and most preferably between 10 to 30 min, (c) depressurizing and discharging to a drying section. A lower pressure generally requires a longer treatment time, while high pressures require shorter treatment times to obtain a suitable hydrolysis.

The raw keratinaceous material may be milled or crushed to reduce the size before loading in the hydrolyser. Generally, size reduction for feathers and hair of pigs or cattle is not required.

The wet raw keratinaceous material generally will have a moisture content of between about 30 and about 80% (% moisture relative to the total weight of the keratinaceous material plus moisture) when supplied to the hydrolyser, preferably the moisture content is about 50 wt% or more, and commonly around about 70% . It is preferred to use less than 75 wt% of moisture (i.e. less than 3 parts water on 1 part of dry substance keratinaceous material), because the added water needs to be removed, and takes energy to heat in the hydrolyser. Therefore, a preferred amount of water is about 65 wt% or less (at most about 2 parts of water relative to 1 part of dry substance of keratinaceous material, preferably feathers).

The hydrolyser generally works at a pressure of about 15 bar or lower, preferably 10 bar or lower, as higher pressure is increasingly costly. However, pressures up to 100 bar can be used depending on the type of equipment used. The pressure generally is about 2 bar or higher. Higher pressure is preferred to increase the degree and speed of hydrolysis. Hence, the pressure preferably is about 4 bar or higher, and even more preferable, about 6 bar or higher. Generally, the pressure will be about 9 bar or lower. The pressure is given as bar absolute.

The hydrothermal hydrolysis reaction is breaking up peptide bonds by the action of water, temperature and pressure. Generally, no acid or base is present, although some may be present in the keratinaceous material coming from the slaughterhouse. Generally small amounts of added reagents are possible to use such as calcium hydroxide or high temperature resistant enzymes like Cibenza , Valkerase enzyme preparations. It is preferred to have a hydrolysis reaction with only water/steam as the active reagent.

The hydrolysis in step (i) will be performed in a hydrolyser, which is generally called a steam-hydrolyser. Such hydrolyser is essentially a stirred vessel, and may be operated as a batch or continuous process. The hydrolyser preferably allows a continuous process, and is a stirred tube like vessel, like an extruder or a vertical stirred vessel. The hydrolyser may be a horizontal hydrolyser or a vertical hydrolyser. Stirring preferably is done with a slowly propelling screw type of mixer, paddles or the like.

The hydrolysis step (i) generally will last between about 5 seconds and about 240 min, preferably 90 seconds or longer, and - at a pressure below about 15 bar - generally between about 5 min and about 240 min, preferably between about 10 and about 180 min. Lower pressure generally requires longer reaction times. It is preferred to perform the reaction in such a way, that the residence time in the hydrolyser will be about 60 min or less, most preferred about 40 min or less.

The steam may be directly injected and/or used for indirect heating . Indirect heating may also be affected with e.g. hot oil coils. Ultimately, the pressure should be as required, and the amount of water preferably is such, that saturated steam is present at the chosen pressure and temperature. Preferably, the amount of steam present is about 200 gram of steam or more per kg of keratinaceous material.

### Drying process and the air turbulence mill with accompanying parts

The partly hydrolyzed keratinaceous material will be dried hereafter according to step (ii) of the present invention. Drying generally is done in a number of steps. The first step comprises bringing the mixture leaving the steam-hydrolyser to atmospheric pressure, while evaporating part of the water. This water vapor may be further directly oxidized in a thermal oxidizer or condensed, and treated in a waste water treatment plant or the like.

In one preferred embodiment of the invention, the mixture leaving the hydrolyser, of which part of the water is evaporated because of the reduction in pressure, is subjected to a pressing step. In this step, part of the water from the keratinaceous material is removed, to bring the water content from, for example, about 65 wt% to about 45 wt%.

The water pressed from the keratinaceous material after the hydrolysis step is generally referred to as stick water. The stick water is rich in solubilized proteins that have nutritive value. The stick water may be concentrated by evaporation using as common practice waste heat recovery and further dried by itself using an appropriate drying system and valorized as such, but is generally concentrated and transferred back to the hydrolyzed feathers in order to produce dried feather meal.

In an embodiment of the invention the stick water that may be pressed out from the keratinaceous material after the hydrolysis step is preferably concentrated, and the concentrated solution may be injected into the air turbulence mill separate from the solid keratinaceous material, or mixed back before introducing the keratinaceous material into the air turbulence mill.

In an alternative, and even more preferred embodiment, in the process according to the present invention, the mixture leaving the hydrolyser that has been reduced to atmospheric pressure, while still at elevated temperature is directly fed to the air turbulence mill. The moist hot keratinaceous material comprises so much energy that a gas stream which is at ambient temperature can be used to dry the material in an air turbulence mill. The moist keratinaceous material generally will have a temperature of about 70 °C or higher, like for example about 80 °C or higher, such as between about 90 and 100 °C. As the keratinaceous material is at atmospheric pressure, the temperature will be about 100 °C (depending on the ambient pressure) or less.

In a preferred embodiment of the invention, the resultant, still moist partly hydrolyzed keratinaceous material is dried to a moisture content of about 10 wt% or less, preferably about 8 wt% or less. Drying to an amount of water lower than about 4 wt% generally is not necessary, but would not harm. Drying is most preferably performed till a moisture content of about 5-7 wt%. Drying results in a storage stable product.

Drying is an important step for the final quality of the keratinaceous material such as feather meal. It appears that common drying techniques cause the digestibility to be reduced. In the preferred embodiment of the invention, the drying of step (ii) is performed at atmospheric pressure while forming small particles, such that drying is very efficient. The atmospheric pressure includes slight vacuum, which is often used to aid flow of the gas and transport of the powder. The powder may be retrieved from the dry cyclone by means of an air lock rotating valve. The pressure before the mill can be -5 to -8 mbar and after the mill between -30 and -50 mbar.

In one preferred embodiment, the partly hydrolyzed material resulting from step (i) is dried with a method allowing low heat damage, such that the reduction of the digestibility of the keratinaceous material is limited and characterized by a pepsin and/or ileal digestibility remaining higher than respectively 80% and 85%, preferably about respectively 82% and 90%, and more preferably about 85% and 92% or higher. More preferably, the reduction in pepsin and/or ileal digestibility measured before and after the drying step is preferably less than 5%. To obtain such material with low heat damage, the inventors of the present invention discovered that drying is to be carried out with a gas flow while at the same time grinding the material. The present inventors found that further improvement of the in vitro digestibility and material characteristics of keratinaceous material were achievable by using an air turbulence mill, because the small particles that result from the grinding action aid in quickly drying the hydrolyzed material.

Hence, according to the present invention, the partly hydrolyzed material resulting from step (i) is concurrently dried and ground with a gas stream, generally air (that may be low in oxygen), using an air turbulence mill. The air turbulence mill has the benefit of a fast grinding and drying-effect, and the use of an air turbulence mill according to the invention results in drying and simultaneously milling or grinding the keratinaceous material by introducing the material to dry and a flow of gas, generally air, into a high speed rotor in a confined chamber.

An air turbulence mill generally comprises a chamber (stator) with appropriate inlets and outlets for product and stream(s) of gas in which a rotating member (rotor) is mounted with stacks of impacting devices which rotating member can rotate at high speed. The inner walls of the stator are preferably lined with impacting members, like corrugated sheets, in order to increase the efficiency of the grinding with additional friction and shear forces. The rotor generally is placed vertically relative to the outlet.

Several types of air turbulence mills exist. They are generally referred to as turbulent air grinding mills or vortex air mills. Some of these are also named 'spin driers and grinders', and others also 'flash dryers and grinders'. Spin dryers-and-grinders and flash dryers and grinders basically dry and mill wet product in a very short period of time. The rotor generally is positioned vertically relative to the outlet. The present invention contemplates the use of all of them under the notion of "air turbulence mill". It is preferred to use vertically positioned rotors, as these appeared to use less energy.

Air turbulence mills, such as those known in the art from Atritor (Cell Mill), Hosokawa (Drymeister), Larsson (Whirl flash), Jäckering (Ultra Rotor), Rotormill, Görgens Mahltechnik (TurboRotor) or SPX may be used for drying and grinding in the present invention. Some of such air turbulence mills are described in e.g. US4747550, WO1995/028512 and WO2015/136070.

The air turbulence mill may comprise a classifier, which causes a separation of larger and smaller particles. The use of a classifier allows the larger particles to be returned to the grinder, while smaller particles are left through for further processing. In another embodiment, two or more grades of particulate feather meal are produced, with differing particle sizes and bulk properties by having two outlets out of the classifier.

The drying is performed with a stream of gas (generally air, that may be low in oxygen) into a high speed rotor. The inlet temperature generally ranges between about 20 °C and 500°C, preferably between about 20 °C and 450 °C and even more preferably about 20 °C and 180 °C. The higher end of the temperature may require careful processing and/or may require lower amounts of the heated gas to be used. It would for example be possible to use the heated gas at a temperature of about 450 °C and a second gas stream at room temperature if high gas velocities are required.

The outlet temperature of the air generally is below 100 °C, preferably below 90°C. The temperature of the inlet-gas may be lower in case the keratinaceous feed has a higher temperature.

The flow of the air generally is about 5 m³/h per kg of fed material or higher, preferably about 10 m³/h per kg fed material. Generally, the amount is about 50 m³/h or less, preferably about 40 m³/h per kg fed material or less. Suitable, most preferred, amounts are for example between 15 and 30, such as between 20-25 m³/h per kg of fed product.

The gas flow can be fed into the mill directly with the feed material, or indirectly, wherein the hydrolyzed keratinaceous material is fed on one place, and the gas stream is fed into the air turbulence mill separately in one or several other places.

The air turbulence mill used in the present invention preferably comprises a confined chamber (stator) with appropriate inlets and outlets for the product and the stream of gas in which a vertically placed shaft (rotor), mounted with stacks of cutting and impacting devices such as blades, discs, plates and the like, rotates at high speed. The inner walls of the stator can be lined with corrugated sheets in order to increase the efficiency of the grinding with additional friction and shear forces.

The rotor generally rotates with a tip speed of about 10 m/s or higher, more preferably of about 15 m/s or higher, even more preferably of about 20 m/s or higher. In one embodiment, generally, the speed is about 50 m/s or lower, preferably about 30 m/s or lower. A suitable speed is for example about 25 m/s. In another embodiment, which is even more preferred, the tip speed is about 150 m/s or lower, preferably about 100 m/s or lower, and most preferably about 75 m/s or lower. Generally, the tip speed is about 20 m/s or higher, preferably about 30 m/s or higher.

The grinder may produce substantial heat. Furthermore, the incoming wet keratinaceous material may be at a temperature above room temperature. If useful, the gas stream can be heated, for example by direct heating in a gas burner (which also causes the oxygen level to be reduced, which lowers ignition hazard), or by indirect heating through a heat exchange with steam or hot oil.

The air turbulence mill comprises one or more inlets for a gaseous flow. One or more of these gas streams may be heated. In case one stream of gas is heated, it is preferably heated to a temperature of about 50 °C or higher.

The gaseous flow can be introduced in different ways. Generally, the main gas stream is introduced at the bottom of the air turbulence mill. This inlet may be the same inlet as the wet product inlet. In such case, the gas flow is generally used to transport the product. A second gas stream can be used to influence the milling and flow behavior of the mill. In particular in case the product is not easy to transport with a gas flow, it can be introduced in the mill through a screw or pump.

To maintain a high digestibility of the partly hydrolyzed material the average residence time in the air turbulence mill is preferably short, like less than 10 sec, preferably below 5 seconds, more preferably below 2 seconds, even more preferably below 1 second. The low average residence time of the material to dry in the mill allows efficient drying while only a relatively small increase in temperature of the keratinaceous material is observed. In case a classifier is used, the average residence time will be higher, but the time that any powder actually is in the grinder remains preferably below 10 sec, and even more preferably below 5 sec.

Preferably the temperature of the keratinaceous material coming out of the air turbulence mill is at a temperature range between about 30°C and 90 °C, more preferably between about 40°C and 80 °C, even more preferably between about 45°C and 75 °C.

The gas flow leaves the air turbulence mill, optionally through a classifier, with the dried product. The dry product in the form of small particles is separated from the gas stream, which separation is generally done in one or more cyclones, preferably one cyclone or by means of a bag filter or combinations of both.

It is possible to further classify the resultant powder leaving the cyclone, like for example on a horizontal sieve for screening oversized, large particles and/or for removing dust. It is furthermore possible to produce different grades of feather meal, with smaller and larger particle sizes.

Reject of the sieve (oversized particles and/or dust) preferably is reintroduced in the feed for further treatment in the air turbulence mill. Mixing of reject with the wet feed material (also referred to as "back mixing") can improve the feeding operation and overall efficiency of the drying and grinding.

Preferably, classification is done over a sieve (or other classification device) with the cut off of 1 mm or lower, preferably 800 µm or lower. Classification can for example be done over a sieve with a cut off of 300 µm, 500 µm or 900 µm.

Furthermore, the flow of air entering the air turbulence mill can be adjusted to influence the residence time and/or the size of the particles. For example, the flow of air directly influences the residence time in the chamber and contact time with the milling device; the higher the flow of air the shorter the residence time and therefore the bigger the particles, and vice-versa the lower the flow of air and the smaller the particles. The size of the particles is further influenced by a classifier. The skilled person will be able to balance the air turbulence mill to provide particle sizes as required.

### The resultant dry keratinaceous material (feather meal)

The partly hydrolyzed keratinaceous material is further used as a dry product (generally called feather meal when the starting keratinaceous material is feathers), with a moisture content of about 10 wt% or less.

The dried material comprises preferably less than 8% of moisture. Most preferable, the dried material has a moisture content of between 5 and 7 wt%.

The partly hydrolyzed material after drying preferably has a pepsin and ileal digestibility of higher than about respectively 80% and 90%, more preferably higher than about respectively 82% and 92%. An even more preferred pepsin digestibility is above 85%.

Even though the hydrolysis step substantially enhances the digestibility, a large portion of the feather meal is insoluble in plain water (demi water). Generally, more than 50 wt% of the feather meal is insoluble, and more generally more than 90% is insoluble.

The drying and grinding in an air turbulence mill has the further advantage that the color of the material is a creamy light brown color, which is lighter and more homogeneous than classically dried material. The color of the powder can for example be measured using a Chromameter according to CIE-L*a*b color space. The lighter color is characterized by a relatively high (L) value, optionally combined with a relatively high (b) value. The high (L) value indicates the lightness of the powder, while the higher (b) value indicates the distinct yellower color.

Generally, the (L) value of the keratinaceous material is about 50 or higher, preferably 54 or higher, and more preferably about 60 or higher.

Generally, the (b) value will be about 10 or higher, preferably 12 or higher, and more preferably about 14 or higher.

The combined (L) and (b) values preferably are an (L) value higher than 50, and a (b) value higher than 10, higher than 12, or higher than 14. The combined (L) and (b) values more preferably are an (L) value of about 54 or higher, and a (b) value higher than 10, higher than 12, or higher than 14. The combined (L) and (b) values even more preferably are an (L) value of about 60 or higher, and a (b) value higher than 10, higher than 12, or higher than 14.

The resultant keratinaceous material from the hydrolysis and drying and grinding method used in accordance with the present invention is in the form of a powder with powder characteristics preferably such, that the powder has good flow properties, packaging characteristics as well as good dosing characteristics to formulate pet foods and animal feeds.

The digestible keratinaceous powder material such as feather meal comprises at least 17 amino acids, preferably at least 18 amino acids, such as cysteine and tyrosine.

Preferably, the amount of cysteine is about 2 wt% or more, more preferably about 3 wt% or more, even more preferably about 4 to about 5 wt% or more relative to the total protein content.

Preferably, the amount of tyrosine is about 1 wt% or more, more preferably about 1.5 wt% or more, even more preferably about 2 to about 3 wt% or more relative to the total protein content.

The dried and ground material is generally in the form of particles of which more than about 99 wt% is smaller than a few mm, like for example smaller than about 2 mm. Generally, more than about 95 wt% is larger than about 8 µm, in order to have a free flowing powder that can easily be handled and further processed into for example formulated pet foods and animal feeds.

In a preferred embodiment the average particle size (defined as d50; 50% of the volume fraction of the particles is larger, and 50% is smaller), measured by laser diffraction on a Beckman Coulter particle size analyzer using standard software, is between about 20 µm and about 0.7 mm, preferably between about 20 µm and about 500 µm, more preferably between about 50 µm and about 300 µm. For example, the average particle size is about 75 or about 150 µm.

The d90 preferably is below about 1 mm, more preferably below about 0.7 mm. The d10 preferably is above about 10 µm, and more preferably above about 15 µm.

The above described sizes are highly advantageous. Hydrolyzed feathers dried in a conventional disc dryer have at the outlet of the dryer a coarse heterogeneous particle size distribution with particle sizes in average above 2 mm and quite often above 5 mm necessitating further grinding and sieving equipment and therefore additional footprint requirements, additional dust emissions and in general making a less attractive process set up.

The particle size distribution of the partially hydrolyzed keratinaceous material of the present invention is relatively homogeneous. For example, the d90 divided by the d10 is about 20 or less, preferably about 15 or less, while the d90 is about 1 mm or lower.

An antioxidant and/or an anticaking agent can be blended into the keratinaceous powder material to improve respectively its oxidation stability and its flowability.

In a preferred embodiment the antioxidant is added and mixed into the wet feed material prior to the turbulence mill in order to have a homogeneous incorporation and avoid undesired spots and agglomeration if such incorporation was done on the finished powder.

In a preferred embodiment of the invention the keratinaceous powder material has a poured density of about 0.2 g/cm³ or higher, more preferably of about 0.25 g/cm³ or higher, even more preferably about 0.3 g/cm³ or higher. Generally, the poured density will be about 0.6 g/cm³ or lower, like for example about 0.55 g/cm³ or lower.

In a further preferred embodiment of the invention the keratinaceous powder material has a tapped bulk density of about 0.25 g/cm³ or higher, more preferably of about 0.3 g/cm³ or higher and even more preferably 0.35 g/cm³ or higher, more preferably of about 0.4 g/cm³ or higher, even more preferably about 0.45 g/cm³ or higher. Generally, the tapped density will be about 0.7 g/cm³ or lower, like for example 0.65 g/cm³ or lower.

In a further embodiment, the keratinaceous powder material may be pelletized to increase its density to optimize volume and transport cost.

Before or after drying, some amino acids may be added to the partly hydrolyzed keratinaceous material. In particular, it can be useful to add one or more of methionine, lysine, and tryptophan, or digestible proteins containing these amino acids in relatively large amounts, as the amount of these amino acids is relatively low in keratinaceous material.

The dry highly digestible keratinaceous material can be packed in small bags, big-bags or other bulk containers. The keratinaceous material can be packed and shipped in any kind of Bulk Container, big bag or other container.

The digestible keratinaceous material such as feather meal may be used as feed, as feed supplements, such as in pet food and/or in aquaculture feeds. The material may be used in powder form or may be converted to larger dosing units in the form of granules, flakes and the like using conventional processing techniques. The feather meal can be used as carrier for other ingredients, and/or can be used as extender.

When used in the preparation of a feedstuff, the keratinaceous material produced in accordance with the present invention may be used in conjunction with one or more of: a nutritionally acceptable carrier or extender, a nutritionally acceptable diluent, a nutritionally acceptable excipient, a nutritionally acceptable adjuvant or a nutritionally active ingredient. The keratinaceous material may itself be a carrier or extender for other functional ingredients such as flavoring agents, palatants and attractants.

The process of the present invention can be easily applied in conventional feather meal plants, because the air turbulence mill with the optional classifier, the cyclone and the air supply occupy substantially less space than a conventional disc dryer or other conventional dryers with ancillary equipment. Hence, the present invention also relates to a method of retrofitting a feather meal plant by replacing conventional drying equipment with an air turbulence mill and a cyclone with ancillary equipment.

### MEASUREMENT METHODS

The following methods were used in the examples, and are suitable as methods to measure the parameters stated in the description and the claims:
Weight percentage (wt%) moisture: moist keratinaceous material is dried overnight in a vacuum stove at reduced pressure and with a siccative. The material is weighed before and after the drying step, and the amount of moisture is calculated using the initial measured weight as 100% while assuming that all the volatile material is water.

Solubility of the keratinaceous material is determined by dissolving 1 gram of keratinaceous material in 5 ml water at 20 °C. The transparency of the liquid is determined by the human eye. Feather meal is largely insoluble in water. Generally, more than 50 wt% of the feather meal is insoluble, and more generally more than 90% is insoluble.

In a quantitative test the solubility of the keratinaceous material can be performed as follows: 100 g of feather meal is mixed into 1000 mL of water and the mixture is stirred during 15 minutes at 20 °C. The mixture is filtered over a 350 µm filter under pressure. The filtrate and the solids on the filter are dried and their weight measured. In this analysis, one would correct for the moisture content of the materials, i.e. the moisture content of the feather meal should be measured as well. Further, one should correct for the amount of soluble material that remains in the wet solids which are filtered out

Pepsin digestibility is measured according to ISO 6655 (August 1997) using as per the said mentioned norm a pepsin concentration of 0.02% in hydrochloric acid.

Ileal digestibility (also referred to as Boisen digestibility) is measured according to the methods described by S. Boisen in "Prediction of the apparent ileal digestibility of protein and amino acid in feedstuffs for pigs by in vitro analysis", Animal Feed Science Technology, 51, pp.29-43 (1995) and further described in "In vitro analysis for determining standardized ileal digestibility of protein and amino acids in actual batches of feedstuffs and diets for pigs"; Livestock Science, 309 : pp.182-185 (2007).

The amino acid analysis, lanthionine and de-carboxylated amino acids (like cadaverine, putrescine, or histamine) analysis are performed with standard HPLC methods.

Particle size distribution has been measured with laser diffraction; on a Beckman Coulter particle size analyzer - dry powder system. Standard software of the manufacturer was used. The results are described as d10, d50, d90 etc., which relates to the volume fractions.

The poured and tapped density can be measured by pouring an amount of feather meal in a 100 mL cylinder (diameter 2.5 cm), and measuring the amount of meal present in gram. Tapping is done by placing the beaker on a vibrating surface (0.5 mm vertical vibration; 240 times per minute) for 5 min; and measuring the volume of feather meal. The poured density is calculated as amount of feather meal divided by 100 (g/cm³). The tapped density is the same gram amount divided by the volume measured.

Color measurements are performed with CIE-Lab, according to standard techniques. A Chromameter was used with standard software.

Further modifications in addition to those described above may be made to the materials and methods described herein without departing from the spirit and scope of the invention.

Accordingly, although specific embodiments have been described, the following are examples only and are not limiting upon the scope of the invention.

### EXAMPLES

In a continuous vertical hydrolyser, working at 7 bar and saturated steam, feathers from chicken with a moisture content of 65 wt% were treated for 25 min. The partly hydrolyzed keratinaceous material was brought to atmospheric pressure through a let-down valve, and the fibrous mass contained about 55% of water, while being at a temperature of 95 °C.

The partly hydrolyzed feathers were dried with two different air turbulence mills. The inlet temperature of the air was about ambient temperature for the first air turbulence mill, as the feed was used directly from the hydrolyser. The first mill was equipped with a classifier, returning particles that were larger than about 300 µm back to the mill. The product feed was about 200 kg/hr, while the amount of air was between 4000-5000 m³/hr. In the second set of experiments, the fibrous mass was pressed in a screw press to remove water and allowed to cool down to below 30 °C. The residual water in the partly hydrolyzed feathers was about 45 wt%, and the fibrous mass was used when at about ambient temperature as a feed to the air turbulence mill. The second air turbulence mill was operated with an inlet gas (air) at a temperature of 120 °C. The amount of gas was between about 15 and 30 m³/hr*kg.

The average residence time of the product was estimated to be about 2 sec in the first mill, and about 1 sec in the second mill. During drying and grinding, the product did not reach temperatures higher than about 80 °C.

The moisture of the particles after drying and grinding was about 7%. The in-vitro pepsin digestibility (pepsin concentration of 0.02% in hydrochloric acid) of the Total Nitrogen Matter was 85 % or higher, the ileal (Boisen) digestibility was 92%. The color was homogeneously cream to light brown.

The powder obtained had useful size and flow properties. The powdery feather meal could be characterized by the following properties:

### Results:

| Air turbulence mill, prior art and conventional drying | Particle size - dry powder Beckman Coulter particle analyzer (xx% of powder is below yy µm)* | | | | | Non-tapped density (g/cm³) | Tapped density (g/cm³) |
|---|---|---|---|---|---|---|---|
| | 10% | 25% | 50% | 75% | 90% | | |
| Mill #1 | <17 µm | <35 µm | <75 µm | <147 µm | <219 µm | 0.29 | 0.39 |
| Mill #2, trial 1 | <52 µm | <106 µm | <192 µm | <332 µm | <521 µm | 0.53 | 0.60 |
| Mill #2, trial 7 | <42 µm | <86 µm | <158 µm | <281 µm | <512 µm | 0.46 | 0.55 |
| Mill #2, trial 13 | <32 µm | <70 µm | <133 µm | <206 µm | <639 µm | 0.45 | 0.53 |
| Conventional feather meal, batch 1 ⁽¹⁾ | <67 µm | <161 µm | <425 µm | <890 µm | <1435 µm | 0.38 | 0.50 |
| Prior art feather meal, batch 2 ⁽¹⁾⁽²⁾ | <160 µm | <347 µm | <729 µm | <1253 µm | <1663 µm | 0.36 | 0.46 |
| Prior art feather meal, batch 3 ⁽¹⁾⁽²⁾ | <120 µm | <244 µm | <606 µm | <1182 µm | <1634 µm | 0.53 | 0.66 |

| | | | | | | | |
|---|---|---|---|---|---|---|---|
| ⁽¹⁾ The Beckman Coulter particle size analyzer does not measure particles larger than 2 mm. Regular feather meal does contain such larger particles, but these are disregarded in the results shown in this table. ⁽²⁾ Feather meal produced according to WO2015/014860 | | | | | | | |

Furthermore, color measurements were performed according to CIE-Lab (L*a*b* color space) on several batches of products. The (L) stands for Lightness, with black at L = 0 and white at L = 100 (hence, the higher the (L) number, the lighter the color): Mill-1 produced the feather meal with the lightest color. Mill-2 gave also a feather meal lighter in color compared to conventionally dried feather meal and also compared to feather meal produced according to WO2015/014860. The (a) and (b) stand for the color dimensions (a= red-green; b = yellow-blue; with a=0 and b=0 being neutral grey). High (b) values with this type of material indicate yellow tones. The (a) values generally are quite low, but strongly colored material has an (a) value higher than 4. Hence, an (a) value lower than about 4 is preferred, in combination with the (L) and (b) values explained elsewhere. More preferably, the (a) value is below 3.5. Results are given in the following table:

| Air turbulence mill, prior art and conventional drying | Color measurement (CIE Lab) | | |
|---|---|---|---|
| | L | a | B |
| Mill #1 | 70.8 | 2.99 | 17.5 |
| Mill #2, trial 1 | 54.9 | 3.61 | 14.4 |
| Mill #2, trial 7 | 56.3 | 3.42 | 14.6 |
| Mill #2, trial 13 | 58.3 | 3.18 | 15.3 |
| Conventional feather meal, batch 1 | 36.7 | 4.30 | 1.37 |
| Prior art feather meal, batch 2⁽¹⁾ | 37.4 | 2.8 | 5.31 |
| Prior art feather meal, batch 3⁽¹⁾ | 45.3 | 2.35 | 7.97 |
| Conventional feather meal, batch 4 | 41.2 | 3.71 | 7.80 |

| | | | |
|---|---|---|---|
| (1) Feather meal produced according to WO2015/014860 | | | |

From this table, it is clear that the absolute color is much lighter for the air turbulence milled and dried feather meal. Further, the yellow tone (b) is substantially higher, giving the feather meal a distinct appearance. The green/red tone (a) is low in all instances, although slightly increased when the feather meal is relatively dark. Hence, (L) and (b) are indicative for the creamy light color of the keratinaceous material dried with the air turbulence mill.

### Example 2

In an air turbulence mill (JÄCKERING, model Ultra Rotor III a), with a feed of 200 kg/h of hydrolysed feathers with a residual water content of about 45 wt% as described in the former examples was dried and ground in a number of runs. The air turbulence mill was operated with an inlet gas (air) at a temperature of 160 °C. The amount of gas was between about 15 and 30 m³/hr*kg. The tip speed of the rotor was between 50 and 60 m/s.

The average residence time of the product was estimated to be less than about 1 sec. During drying and grinding, it was estimated that the product did not reach temperatures higher than about 80 °C, because the temperature of the air at the outlet of the air turbulence mill was circa 90°C. The product was screened over a 300 µm sieve, and the smaller fraction was further characterized as described below. The larger fraction (about 10-15 wt%) was in one trial fed-back into the feed for the air turbulence mill; this run was operating smoothly.

The moisture of the particles after drying and grinding was about 6% (generally between 5.7 and 6.3 wt%). The amount of protein (Kjelahl) was about 88 wt%. The in-vitro pepsin digestibility (pepsin concentration of 0.02% in hydrochloric acid) of the Total Nitrogen Matter was about 85 %; the ileal (Boisen) digestibility was about 90%. The color was homogeneously cream.

The powder obtained had useful size and flow properties. The powdery feather meal could be characterized by the following properties (volume %): d10: 23 µm; d50: 70 µm and d90: 153 µm. The tapped density was about 0.38.

## Claims

1. Method for producing digestible, partly hydrolyzed keratinaceous material, preferably from feathers, hair, wool, hooves or nails, comprising the steps of (1) hydrolyzing keratinaceous material in the presence of water, in a hydrolyser with heat and at a pressure between about 2 bar and about 100 bar, and (2) concurrently drying and grinding the resultant partly hydrolyzed keratinaceous material in an air turbulence mill at about atmospheric pressure such that the drop in pepsin and/or ileal digestibility is less than 10%, and/or the pepsin and ileal digestibility remain higher than respectively 75% and 80%, wherein the resultant keratinaceous material comprises at least partly insoluble material, and wherein the average particle size of the dry product leaving the air turbulence mill measured as d50 in volume fraction, as measured with laser diffraction using a dry powder Beckman Coulter particle size analyzer, is between about 20 µm and about 0.7 mm and the d90 is below about 1 mm.

2. The method according to claim 1 wherein concurrently drying and grinding the resultant partly hydrolyzed keratinaceous material comprising at least partly insoluble material in an air turbulence mill is performed at a temperature such that the keratinaceous material remains at a temperature below about 90 °C, preferably below about 80 °C.

3. The method according to any one of the preceding claims, wherein the air turbulence mill comprises a chamber with appropriate inlets and outlets for product and stream(s) of gas in which a rotating member is mounted with stacks of impacting devices which rotating member can rotate at high speed, and wherein preferably the inner walls of the stator are lined with impacting members, wherein the rotating member rotates at a tip speed between 20-150 m/s.

4. The method according to any one of the preceding claims, wherein the air turbulence mill comprises a classifier.

5. The method according to any one of the preceding claims, wherein the air turbulence mill is operated with a flow of gas, preferably air with optionally a lowered oxygen content, at a temperature between about 20 °C and about 500°C, preferably between about 20 and about 450 °C.

6. The method according to any one of the preceding claims, wherein the gas flow, preferably air, is between about 10 and about 50 m³/hr per kg feed, which flow may be adjusted to influence the particle size of the dried keratinaceous material, and wherein the residence time is less than 10 sec.

7. The method according to any one of the preceding claims, wherein the dry keratinaceous material has a homogeneous creamy light color as measured using the CIE L*a*b color space, wherein the (L) value of the keratinaceous material is about 50 or higher, preferably 54 or higher, and more preferably about 60 or higher, and/or wherein the (b) value is about 10 or higher, preferably about 12 or higher, and more preferably about 14 or higher.

8. The method according to any one of the preceding claims, wherein the dried and ground digestible keratinaceous material has an average particle size (d50) of between about 20 µm and about 0.5 mm measured by laser diffraction using a dry powder Beckman Coulter particle size analyzer, preferably of between about 50 µm and about 300 µm.

9. The method according to any one of the preceding claims, wherein the dried and ground digestible keratinaceous material has a d90 particle size below about 0.7 mm measured by laser diffraction using a dry powder Beckman Coulter particle size analyzer, and/or wherein the dried and ground digestible keratinaceous material has a d10 particle size above about 10 µm, preferably above about 15 µm, as measured by laser diffraction using a dry powder Beckman Coulter particle size analyzer.

10. The method according to any one of the preceding claims, wherein the dried and ground digestible keratinaceous material has a d90 divided by d10 of about 20 or less, preferably of about 15 or less.

11. The method according to any one of the preceding claims, wherein the dried and ground digestible keratinaceous material leaving the dryer and grinder has a poured density of about 0.2 g/cm³ or higher, preferably of about 0.25 g/cm³ or higher.

12. The method according to any one of the preceding claims, wherein the dried and ground digestible keratinaceous material as leaving the dryer and grinder has a tapped bulk density of about 0.25 g/cm³ or higher, preferably of about 0.3 g/cm³ or higher, even more preferably about 0.35 g/cm³ or higher.

13. The method according to any one of the preceding claims wherein blood is fed into the air turbulence mill together with the partly hydrolyzed keratinaceous material, wherein the amount of blood and keratinaceous material is between about 10-50 wt% blood and about 50-90% keratinaceous material.

14. The method according to any one of the preceding claims wherein the resultant keratinaceous material with or without blood has a pepsin and/or ileal digestibility higher than about respectively 80% and 90%, more preferably higher than about respectively 82% and 92%.

15. Use of the hydrolyzed, partly insoluble keratinaceous material according to any one of the preceding claims as feed and/or feed additive, like in pet food or for aquaculture feed, or in cosmetics, as carrier and/or extender for pet food and feed palatants.
